(19) **Europäisches Patentamt**

**European Patent Office**

**Office européen des brevets**

(11) Veröffentlichungsnummer: **0 021 329**
**B2**

(12) # NEUE EUROPÄISCHE PATENTSCHRIFT

(45) Veröffentlichungstag der neuen Patentschrift:
**06.06.88**

(21) Anmeldenummer: **80103376.2**

(22) Anmeldetag: **18.06.80**

(51) Int. Cl.⁴: **B 23 F 5/02**

(54) **Teilwälzverfahren und Vorrichtung zum Schleifen von Verzahnungen.**

(30) Priorität: **20.06.79 CH 5757/79**

(43) Veröffentlichungstag der Anmeldung:
**07.01.81 Patentblatt 81/1**

(45) Bekanntmachung des Hinweises auf die Patenterteilung:
**25.05.83 Patentblatt 83/21**

(45) Bekanntmachung des Hinweises auf die Entscheidung
über den Einspruch:
**06.06.88 Patentblatt 88/23**

(84) Benannte Vertragsstaaten:
**CH DE FR GB IT LI**

(56) Entgegenhaltungen:
**EP-A-0 016 342**
**DE-A-2 833 923**
**DE-C-2 536 895**

**Dissertation "Einfluß der Zahnfußausrundung auf
Spannung und Festigkeit von Geradstirnrädern", M.
Hirt, Techn. Univ. München**

(73) Patentinhaber: **Maag- Zahnräder und -Maschinen
Aktiengesellschaft, Hardstrasse 219, CH- 8023
Zürich (CH)**

(72) Erfinder: **Bloch, Peter, Dr. sc. techn.,
Sonnenbergstrasse 4, CH- 8968 Mutschellen (CH)**
Erfinder: **Bickel, Hansjörg, General
Werdmüllerstrasse 14, CH- 8004 AU (CH)**

(74) Vertreter: **Travnicek, Richard, Maag Zahnräder &
-Maschinen AG PATENTABTEILUNG Neugasse 6,
CH- 8005 Zürich (CH)**

**EP 0 021 329 B2**

## Beschreibung

Die Erfindung bezieht sich auf ein Teilwälzverfahren zum Schleifen von Verzahnungen mit evolventenförmigem Zahnflankenprofil, bei dem zwischen einer tellerförmigen Schleifscheibe und der Zahnflanke der Verzahnung hin- und hergehende Wälzbewegungen, Vorschubbewegungen in Zahnlängsrichtung, Nachstellbewegungen zum Ausgleichen des Schleifscheibenverschleisses und Teilbewegungen vorgenommen werden und eine Vorrichtung zur Durchführung des Verfahrens mit mindestens einem Schleifkopf, an dem eine tellerförmige Schleifscheibe gelagert ist, einem Schleifkopfträger, an dem der Schleifkopf in radialer Richtung der Schleifscheibe nachstellbar geführt ist, einem in Nachstellrichtung verschiebbaren Abrichtgerät und einem Nachstellantrieb, der über ein Nachstellgetriebe dem Schleifkopf und dem Abrichtgerät Nachstellbewegungen im Verhältnis eins zu zwei zu erteilen vermag.

Bei hochbeanspruchten Verzahnungen, wie sie beispielsweise im Flugzeugbau vorkommen, müssen nicht nur die evolventenförmigen Zahnflanken, sondern auch der Zahngrund geschliffen werden, damit sich vorgeschriebene Zahnfußausrundungen einhalten und eine feine Oberfläche des Zahngrundes erzielen läßt, was beides im Hinblick auf die Dauerbiegefestigkeit der Verzahnung äußerst wichtig ist.

Mit bekannten Verfahren der eingangs beschriebenen Gattung und den zum Durchführen dieser Verfahren vorgesehenen bekannten Schleifmaschinen, die beispielsweise gemäß der DE-OS 2 726 843 mit Schleifscheiben-Abricht- und Nachstell-Vorrichtungen ausgerüstet sind, lassen sich in kurzen Bearbeitungszeiten Zahnflanken von höchster Genauigkeit schleifen. Eine Zahngrundbearbeitung war damit jedoch bisher nicht möglich, so daß man bei hohen Anforderungen an Zahnfußausrundungen und Oberflächengüte des Zahngrundes bisher darauf angewiesen war, das Werkstück vor oder nach seiner Bearbeitung auf einer Zahnflankenschleifmaschine auf eine getrennte Maschine für die Zahngrundbearbeitung aufzuspannen.

Es sind zwar auch Verfahren und Vorrichtungen zum Formschleifen von Zahnflanken bekannt, bei denen die von einer Abrichtvorrichtung, z. B. gemäß der DE-PS 2 536 895, ständig aufrechterhaltene Profilform der Schleifscheibe so beschaffen ist, daß sich neben der Evolventenform der Zahnflanken auch die gewünschte Form und Oberflächengüte des Zahngrundes ergibt. Beim Formschleifen ist jedoch von Nachteil, daß die Genauigkeit der Zahnflankenform von der Genauigkeit der Profilform der Schleifscheibe abhängt, so daß bei hohen Anforderungen an die Verzahnungsgüte die Schleifscheibe sehr häufig nachprofiliert werden muß, wozu ein kompliziertes, von Schablonen oder einem Wälzgetriebe gesteuertes Abrichtgerät erforderlich ist. Hinzu kommt die bekannte Schwierigkeit, daß beim Formschleifen von Schrägverzahnungen das Schleifscheibenprofil mit abnehmendem Schleifscheibendurchmesser geändert werden muß. Schließlich ist es beim Formschleifen im Gegensatz zum Teilwälzschleifen nicht möglich, beliebige Profilkorrekturen an den Zahnflanken anzubringen. Und nicht zuletzt sind die Bearbeitungszeiten beim Formschleifen äußerst lang.

Der Erfindung liegt deshalb die Aufgabe zugrunde, ein Teilwälzverfahren der eingangs beschriebenen Gattung und eine Vorrichtung zum Durchführen eines solchen Verfahrens derart zu gestalten, daß in einer und derselben Aufspannung des Werkstückes auf einer Schleifmaschine mit einer tellerförmigen Schleifscheibe oder vorzugsweise einem Paar solcher Schleifscheiben nicht nur die evolventenförmige Zahnflanke sondern auch der Zahngrund geschliffen werden kann.

Die Aufgabe wird erfingungsgemäß für das Verfahren durch das Kennzeichen des Anspruchs 1 und für die Vorrichtung durch das Kennzeichen des Anspruchs 6 gelöst. Dabei kann das Verfahren durch die Merkmale der Ansprüche 2 bis 5 und die Vorrichtung durch die Merkmale des Anspruchs 7 ausgestaltet sein.

Es bleibt also bei der zum Ausgleichen des Schleifscheibenverschleißes vorgesehenen Nachstellung die übereinstimmend mit den Stand der Technik in regelmäßigen oder unregelmäßigen Zeitabständen durchgeführt wird, und zwar normalerweise sowohl in Achsrichtung wie in radialer Richtung der Schleifscheibe, so daß durch das Nachstellen und damit verbundene Abrichten der aktive Schleifpunkt der Schlefscheibe seine bei gegebener Wälzstellung vorbestimmte Lage an der Zahnflanke stets beibehält bzw. durch das Nachstellen immer wieder in diese Lage gebracht wird. Zusätzlich zu dieser wegen des Verschleißes und Abrichtens der Schleifscheibe erforderlichen Nachstellung findet nun erfindungsgemäß gleichzeitig oder zeitlich gegen die Nachstellung versetzt eine Zustellung statt, durch die sich der aktive Schleifpunkt verlagert. Diese Verlagerung ermöglicht es, den Zahngrund zu schleifen, und zwar mit derselben tellerförmigen Schleifscheibe, die zuvor eine Zahnflanke geschliffen hat und/oder danach eine Zahnflanke schleifen wird. Dabei gibt es zwei verschiedene Möglichkeiten des Zahngrundschleifens:

Bei einer ersten Ausführungsform des erfindungsgemäßen Verfahrens taucht die Schleifscheibe bzw. jede Schleifschebe eines Schleifscheibenpaares nur am Ende jedes zum Zahngrund hin gerichteten Wälzhubes in den Zahngrund ein. Das Zahngrundschleifen findet also im Wechsel mit den Wälzschleifen einer Zahnflanke statt. Dabei kann die Schleifscheibe grundsätzlich zu beliebigen Zeitpunkten während der Wälzgeometrie durch das erfindungsgemäße Zustellen verändert, wenn auch im allgemeinen nur geringfügig, so wird die Variante des Tauchschleifens des Zahngrundes im allgemeinen nur zum Schruppen angewandt.

Wenn das Tauchschleifen des Zahngrundes durch Zustellen der Schleifscheibe auch beim Schlichten angewandt werden soll, dann wird die Schleifscheibe zweckmäßigerweise erst an oder kurz vor dem Ende jedes zum Zahngrund hin gerichteten Wälzhubes zugestellt und vor oder zu Beginn des nächsten gegenläufigen Wälzhubes wieder zurückgenommen. Dadurch bleibt die Wälzgeometrie beim Zahnflankenschleifen unverändert.

Durch das mit dem Wälzschleifen der Zahnflanken Hub für Hub kombinierte Tauchschleifen des Zahngrundes entstehen am Zahngrund Mulden, deren Krümmungsradius dem Radius der Schleifscheibe entspricht. Diese Mulden können im allgemeinen hingenommen werden, denn sie bleiben praktisch ohne Einfluß auf die Biegewechselfestigkeit des Zahnfußes. Wenn jedoch ein von Mulden oder Wellen freier Zahngrund gefordert wird, so läßt sich dies mit einer anderen Variante des erfindungsgemäßen Verfahrens erreichen, bei der die tellerförmige Schleifscheibe bei abgeschalteter Wälzbewegung in Zahnlängsrichtung am Zahngrund entlangbewegt wird. Diese Verfahrensvariante erfordert zwar mehr Schleifzeit; dieser Mehraufwand kann aber bei besonders hochwertigen Zahnrädern gerechtfertigt sein, zumal im Vergleich mit dem Zahngrundschleifen auf einer getrennten Maschine noch sehr erhebliche Zeit- und Kostenersparnisse erzielt werden.

Um eine Vorrichtung zum Durchführen des erfindungsgemäßen Verfahrens zu schaffen, wird von einer Vorrichtung gemäß EP-A-16 342, die unter Artikel 54(3) EPÜ fällt, ausgegangen, mit mindestens einem Schleifkopf, an dem eine tellerförmige Schleifscheibe gelagert ist, einem Schleifkopfträger, an dem der Schleifkopf in radialer Richtung der Schleifscheibe nachstellbar geführt ist, einem in Nachstellrichtung verschiebbaren Abrichtgerät und einem Nachstellantrieb, der über ein Nachstellgetriebe dem Schleifkopf und dem Abrichtgerät Nachstellbewegungen im Verhältnis eines zu zwei zu erteilen vermag. Bei einer solchen Vorrichtung ist erfindungsgemäß dem Nachstellgetriebe zusätzlich ein Zustellantrieb zugeordnet, der dem Schleifkopf samt Abrichtgerät gemeinsame und gleichgroße Zustellbewegungen zu erteilen vermag.

Bei der Gestaltung einer Vorrichtung zum Durchführen des erfindungsgemäßen Verfahrens kann ferner auf die Merkmale der erwähnten Patentanmeldung zurückgegriffen werden, daß das Abrichtgerät am Schleifkopf in Nachstellrichtung verschiebbar geführt ist, und am Schleifkopf ein Ritzel gelagert ist, das mit zwei sich in Nachstellrichtung erstreckenden Zahnstangen kämmt, von denen eine am Schleifkopfträger und die andere am Abrichtgerät angeordnet ist. Diese Merkmale können erfindungsgemäß dadurch weitergebildet werden, daß eine der beiden Zahnstangen vom Zustellantrieb derart in ihrer Längsrichtung verschiebbar ist, daß das Ritzel bei einer vom Nachstellantrieb hervorgerufenen Bewegung des Schleifkopfes an einer Drehung gehindert ist und somit das Abrichtgerät an der Bewegung des Schleifkopfes im Verhältnis eins zu eins teilnehmen läßt.

Ausführungsbeispiele der Erfindung werden im folgenden anhand schematischer Zeichnungen erläutert. Es zeigt

Fig. 1 eine Schrägansicht einer Zahnradschleifmaschine mit einer hier vereinfacht dargestellten Vorrichtung zum Durchführen des erfindungsgemäßen Verfahrens,

Fig. 2 eine entsprechende, jedoch ergänzte Schrägansicht der genannten Vorrichtung,

Fig. 3 eine Schrägansicht einer anderen, ebenfalls zur Maschine gemäß Fig. 1 passenden Vorrichtung zum Durchführen des erfindungsgemäßen Verfahrens,

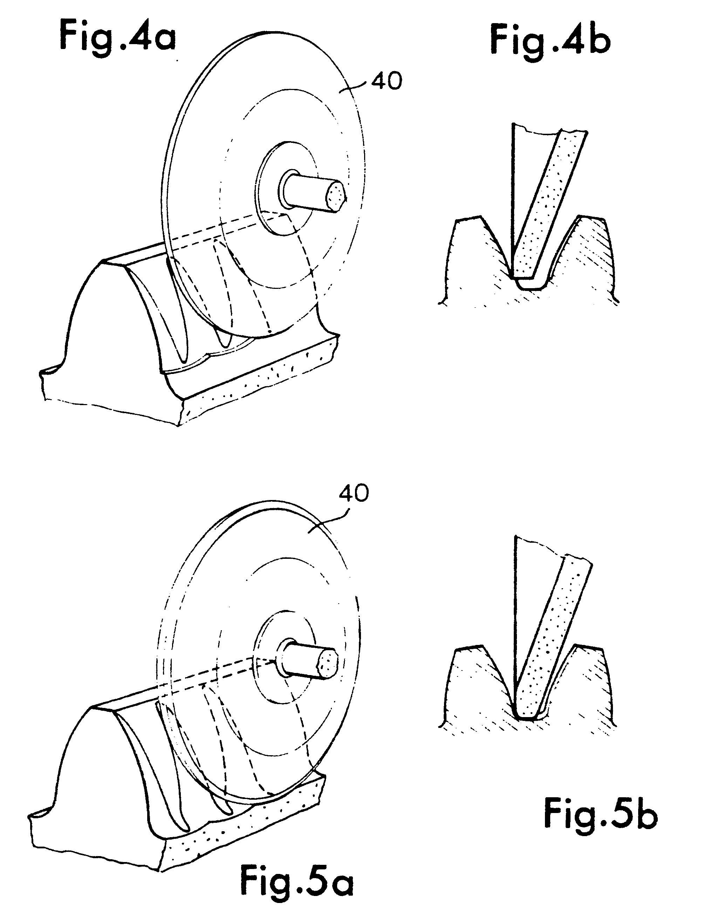

Fig. 4a + 4b das auf der Maschine gemäß Fig. 1 durchführbare bekannte Teilwälz-Schleifverfahren, dargestellt in einer Schrägansicht und in einem Normalschnitt von Teilen eines Zahnrades und einer Schleifscheibe und

Fig. 5a + 5b eine Ausführungsform des auf der Maschine gemäß Fig. 1 mit einer der Vorrichtungen gemäß Fig. 2 oder 3 durchführbaren erfindungsgemäßen Verfahrens, wiederum dargestellt in einer Schrägansicht und einem Normalschnitt von Teilen eines Zahnrades und einer Schleifscheibe.

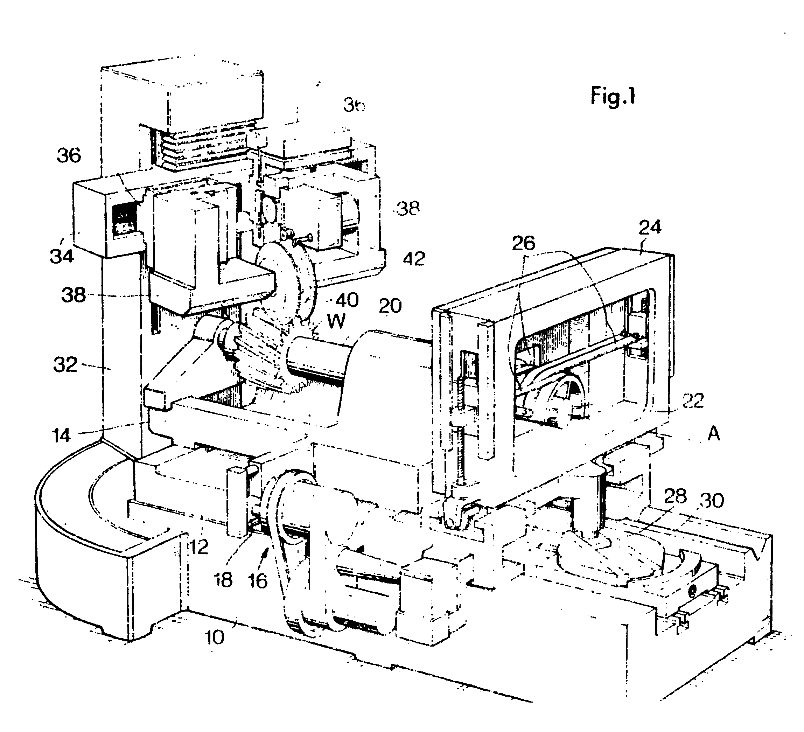

Die in Fig. 1 dargestellte Zahnradschleifmaschine hat ein Maschinenbett 10, auf dem ein Längsschlitten 12 längs, d. h. parallel zur Achse A des zu schleifenden Werkstückes W, verschiebbar geführt ist. Zum Hin- und Herschieben des Längsschlittens 12 ist ein nicht dargestellter Antrieb üblicher Bauart vorgesehen.

Auf dem Längsschlitten 12 ist ein Wälzschlitten 14 quer zur Achse A verschiebbar geführt. An dem Längsschlitten 12 ist seitlich ein Kurbeltrieb 16 angebaut, der mit einem exzentrisch einstellbaren Kulissenstein 18 den Wälzschlitten 14 in hin- und hergehende Querbewegungen versetzt. Auf dem Wälzschlitten 14 ist um die Achse A drehbar ein Aufspanndorn 20 gelagert, der das Werkstück W trägt und über einen nicht dargestellten Teilkopf bekannter Bauart mit einem Rollbogen 22 verbunden ist.

Auf dem Längsschlitten 12 ist, ebenfalls quer zur Achse A, ein Rollbandständer 24 verschiebbar geführt, der durch Rollbänder 26 mit dem Rollbogen 22 verbunden ist. Wird der Wälzschlitten 14 auf dem Längsschlitten 12 hin- und herbewegt, während der Rollbandständer 24 in bezug auf den Längsschlitten 12 stillsteht, so führt das Werkstück W eine Abwälzbewegung aus, die sich aus der Querbewegung des Wälzschlittens 14 und einer überlagerten Drehung des Werkstückes W um die eigene Achse A zusammensetzt.

Am Rollenbandständer 24 ist ein Kulissenstein 28 gelagert, der in einer am Maschinenbett 10 einstellbar befestigten Kulisse 30 geführt ist. Wenn das Werkstück W, wie in Fig. 1 dargestellt, eine Schrägverzahnung aufweist, dann wird die Kulisse 30 in einem mit dem Zahnschrägungswinkel übereinstimmenden Winkel in bezug auf die Achse A eingestellt. Längs der Achse A hin- und hergehende Bewegungen des Längsschlittens 12 haben dann zur Folge, daß der Rollbandständer 24 hin- und hergehende Querbewegungen auf dem Längsschlitten 12 ausführt und infolgedessen über den Rollbogen 22 dem Werkstück 10 zusätzliche hin- und hergehende Teildrehungen vermittelt, die sich den durch hin- und hergehende Querbewegungen des Wälzschlittens 14 hervorgerufenen Teildrehungen überlagern.

Auf dem Maschinenbett 10 ist ferner ein Maschinenständer 32 um eine senkrechte Achse V schwenkeinstellbar angeordnet. Am Maschinenständer 32 ist ein waagrechter Querbalken 34 in der Höhe einstellbar geführt. Der Querbalken 34 trägt zwei in bezug aufeinander symmetrisch gestaltete Schleifkopfträger 36, die gegensinnig längs des Querbalkens 34 verstellbar sind. An jedem Schleifkopfträger 36 ist ein Schleifkopf 38 höheneinstellbar geführt. An jedem Schleifkopf 38 ist eine tellerförmige Schleifscheibe 40 gelagert.

In Fig. 1 ist nur der vom Betrachter aus weiter hinten angeordnete Schleifkopfträger 36 samt zugehörigem Schleifkopf 38 vollständig dargestellt, während vom vorderen Schleifkopfträger 36 und Schleifkopf 38 der Übersichtlichkeit halber wesentliche Teile fortgelassen sind.

An jedem der beiden Schleifköpfe 38 ist ein Abrichtgerät 42, das eine Abrichtfolie 44 und einen Taster 46 aufweist, senkrecht verschiebbar geführt. Ferner ist an jedem Schleifkopf 38 ein Ritzel 48 gelagert, das einerseits mit einer senkrecht am zugehörigen Schleifkopfträger 36 angeordneten Zahnstange 50 und andererseits mit einer senkrecht am zugehörigen Abrichtgerät 42 befestigten Zahnstange 52 kämmt. Zum Höhenverstellen ist jedem Schleifkopf 38 eine senkrechte Gewindespindel 54 zugeordnet.

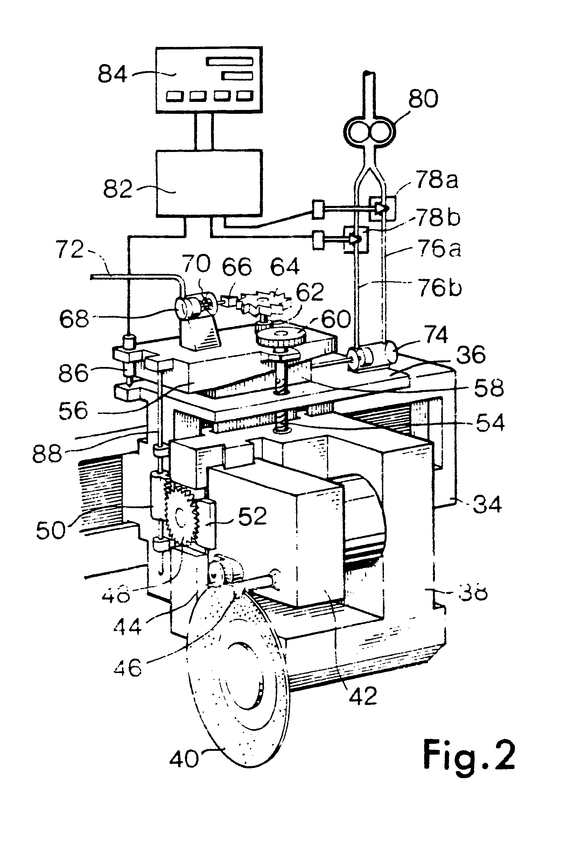

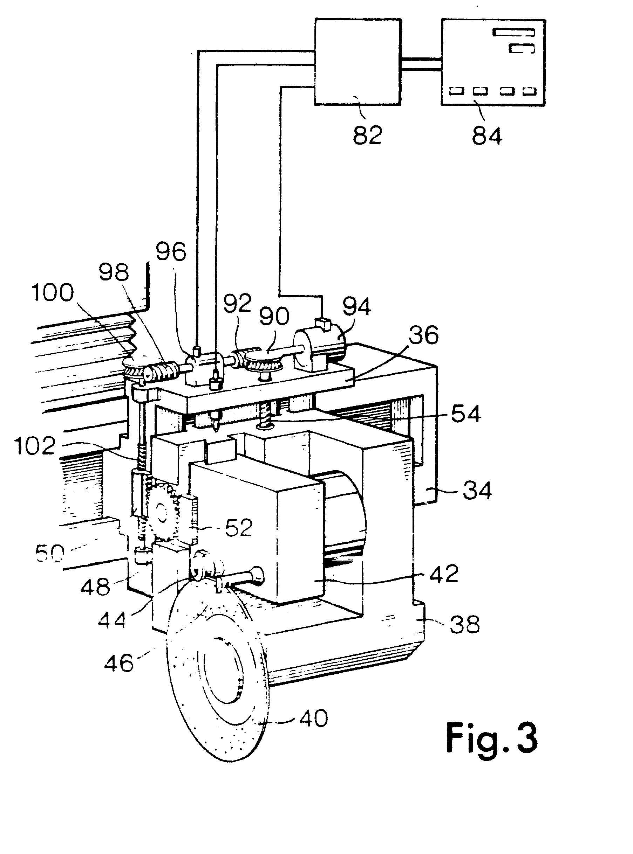

Einzelheiten der Schleifkopfträger 36 und Schleifköpfe 38 werden nun in zwei verschiedenen, in Fig. 2 und 3 dargestellten Ausführungsformen beschrieben.

Gemäß Fig. 2 ist die Gewindespindel 54 in einer waagrechten Keilplatte 56 gelagert, die am Schleifkopfträger 36 höhenverstellbar geführt ist; die Lagerung ist derart, daß die Gewindespindel 54 an jeder Höhenverstellung der Keilplatte 56 teilnimmt. Die Keilplatte 56 liegt auf einem Keil 58, der auf dem Schleifkopfträger 36 waagrecht verstellbar geführt ist, so daß beim Verschieben des Keils 58 die Keilplatte 56 parallel zu sich selbst nach oben oder unten verstellbar wird.

Am oberen Ende der Gewindespindel 54 ist ein Zahnrad 60 befestigt, das mit einem Ritzel 62 kämmt. Das Ritzel 62 ist an der Keilplatte 56 gelagert und fest mit einem Klinkenrad 64 verbunden, das mit einer Klinke 66 zusammenwirkt. Die Klinke 66 ist an der Kolbenstange einer hydraulischen oder pneumatischen Kolben-Zylindereinheit 68 angeordnet, deren Kolben durch eine Rückstellfeder 70 in Richtung vom Klinkenrad 64 weg vorgespannt ist. Der Zylinderraum auf der vom Klinkenrad 64 abgewandten Seite des Kolbens der Kolben-Zylindereinheit 68 ist durch eine Leitung 72 und ein nicht dargestelltes Ventil mit einer Druckmittelquelle verbunden. Jeder Druckmittelimpuls, welcher der Kolben-Zylindereinheit 74 zugeführt wird, bewirkt eine Drehung des Klinkenrades 64 um eine Zahnteilung und somit eine definierte Teildrehung der Gewindespindel 54.

Zum Verschieben des Keils 58 ist eine doppeltwirkende Kolben-Zylindereinheit 74 vorgesehen, deren beide Zylinderkammern durch je eine Leitung 76a bzw. 76b und über je ein Solenoidventil 78a bzw. 78b mit einer Druckmittelpumpe 80 verbunden sind. Die Solenoidventile 78a und 78b sind mit einem Steuergerät 82 und einer Bedienungstafel 84 elektrisch verbunden. Der Zylinder der Kolben-Zylindereinheit 74 ist genügend lang, um eine Verstellung des Keils 58 um eine nach Wahl kürzere oder längere Strecke sowie in mehreren Inkrementen zu ermöglichen.

An der Keilplatte 56 ist ein Weggeber 86 angeordnet, der mit dem Schleifkopfträger 36 zusammenwirkt und ebenfalls an das Steuergerät 82 angeschlossen ist. Bei jeder Höhenverstellung der Keilplatte 56 in bezug auf den Schleifkopfträger 36 liefert der Weggeber 86 entsprechende Signale an das Steuergerät 82.

Schließlich ist an der Keilplatte 56 eine senkrechte Stange 88 befestigt, die am Schleifkopfträger 36 senkrecht verschiebbar geführt ist. Auf der Stange 88 ist die Zahnstange 50 befestigt.

Eine von der Kolben-Zylindereinheit 74 bewirkte Verschiebung des Keils 58 nach rechts in Fig. 2 bewirkt, daß die Keilplatte 56 sich entsprechend dem Keilwinkel nach unten bewegt, und an dieser Bewegung nehmen die Gewindespindel 54 und die Stange 88 teil. Infolgedessen bewegen sich der Schleifkopf 38 sowie die Zahnstange 50 gleichzeitig und um die gleiche Strecke nach unten wie die Keilplatte 56. Da somit - bei sich drehender Gewindespindel 54 - eine Relativbewegung zwischen der Zahnstange 50 und dem Ritzel 48 nicht stattfindet, nimmt das Ritzel 48 die Zahnstange 52, und damit das gesamte Abrichtgerät 42 um die gleiche Strecke nach unten mit, um die sich der Schleifkopf 38 abwärts bewegt. Diese Abwärtsbewegung ist eine reine Zustellbewegung, die nicht mit einem Abrichten der Schleifscheibe 40 verbunden ist und deshalb den aktiven Schleifpunkt nach unten, zum Zahngrund hin, verlagert.

Ist es dagegen erforderlich, die Schleifscheibe 40 abzurichten, so wird über die Kolben-Zylindereinheit 68 eine Drehung der Gewindespindel 54 und somit eine Abwärtsbewegung des Schleifkopfes 38 bewirkt, an der die Keilplatte 56, und somit auch die Zahnstange 50, nicht teilnimmt. Infolgedessen ist die Abwärtsbewegung des Schleifkopfes 38 mit einer Drehung des Ritzels 48 verbunden, so daß dieses das Abrichtgerät 42 in bezug auf den Schleifkopf 38 nach unten verstellt. Bei jeder nur von der Kolben-Zylindereinheit 68 ausgelösten, nicht mit einer Verschiebung des Keils 58 verbundenen, senkrechten Bewegung des Schleifkopfes 38 bewegt sich somit das Abrichtgerät 42 um die doppelte Strecke.

Bei der Ausführungsform gemäß Fig. 3 ist die Gewindesspindel 54 unmittelbar am Schleifkopfträger 36 derart gelagert, daß sie nur gemeinsam mit diesem höhenverstellbar ist. Am oberen Ende der Gewindespindel 54 ist ein Schneckenrad 90 befestigt, das mit einer Schnecke 92 kämmt. Die Schnecke 92 ist auf der Welle eines Schrittmotors 94 befestigt, und über eine Schaltkupplung 96 mit einer weiteren Schnecke 98 kuppelbar. Die weitere Schnecke 98 kämmt mit einem Schneckenrad 100, das auf einer am Schleifkopfträger 36 axial unverschiebbar gelagerten Gewindespindel 102 befestigt ist. Die Gewindespindel 102 ist in ein an der Zahnstange 50 ausgebildetes Muttergewinde eingeschraubt, so daß jede Drehung der Gewindespindel 102 eine Höhenverstellung dieser Zahnstange 50 bewirkt.

Die Vorrichtung gemäß Fig. 3 arbeitet sinngemäß gleich wie diejenigen gemäß Fig. 2.

**Patentansprüche**

1. Teilwälzverfahren zum Schleifen von Verzahnungen mit evolventenförmigem Zahnflankenprofil, bei dem zwischen einer tellerförmigen Schleifscheibe (40) und der Zahnflanke der Verzahnung hin- und hergehende Wälzbewegungen, Vorschubbewegungen in Zahnlängsrichtung, Nachstellbewegungen zum Ausgleichen des Schleifscheibenverschleisses und Teilbewegungen vorgenommen werden, dadurch gekennzeichnet, dass eine zusätzliche Zustellbewegung der Schleifscheibe (40) mit Abrichtgerät (42) in Richtung auf den Zahngrund ausgeführt wird, wobei diese Zustellbewegung zusätzlich zur Nachstellbewegung für den Ausgleich des Schleifscheibenverschleisses erfolgt und so gross ist, dass sie auch den Zahngrund schleift.

2. Teilwälzverfahren nach Anspruch 1, dadurch gekennzeichnet, dass die zusätzliche Zustellbewegung nur am Ende jeder zum Zahngrund hin gerichteten Wälzhubbewegung ausgeführt wird.

3. Teilwälzverfahren nach Anspruch 1, dadurch gekennzeichnet, dass während des Schruppschleifvorganges die zusätzliche Zustellbewegung zu beliebigen Zeitpunkten während der Wälzbewegung ausgeführt wird.

4. Teilwälzverfahren nach Anspruch 3, dadurch gekennzeichnet, dass während des an den Schruppschleifvorgang anschliessenden Schlichtschleifvorganges die zusätzliche Zustellbewegung erst am Ende oder kurz vor dem Ende jeder zum Zahngrund hin gerichteten Wälzhubbewegung ausgeführt und vor oder zu Beginn der nächsten gegenläufigen Wälzhubbewegung wieder zurückgenommen wird.

5. Teilwälzverfahren nach einem der Ansprüche 1 - 4, dadurch gekennzeichnet, dass eine zusätzliche Vorschubbewegung in Zahnlängsrichtung bei abgeschalteter Wälzbewegung der Schleifscheibe vorgenommen wird, wobei die Schleifscheibe am Zahngrund entlang bewegt wird um diesen zu glätten.

6. Vorrichtung zum Durchführen des Verfahrens nach einem der Ansprüche 1 bis 5, mit mindestens einem Schleifkopf (38), an dem eine tellerförmige Schleifscheibe (40) gelagert ist, einem Schleifkopfträger (36), an dem der Schleifkopf (38) in radialer Richtung der Schleifscheibe (40) nachstellbar geführt ist, einem in Nachstellrichtung verschiebbaren Abrichtgerät (42) und einem Nachstellantrieb (68), der über ein Nachstellgetriebe (54 und 60 bis 70) dem Schleifkopf (38) und dem Abrichtgerät (42) Nachstellbewegungen im Verhältnis eins zu zwei zu erteilen vermag, dadurch gekennzeichnet, dass dem Nachstellgetriebe (54 und 60 bis 70) zusätzlich ein Zustellantrieb (56, 58, 74) zugeordnet ist, der dem Schleifkopf (38) samt Abrichtgerät (42) gemeinsame und gleichgrosse Zustellbewegungen zu erteilen vermag.

7. Vorrichtung nach Anspruch 6, bei der das Abrichtgerät (42) am Schleifkopf (38) in Nachstellrichtung verschiebbar geführt ist und am Schleifkopf (38) ein Ritzel (48) gelagert ist, das mit zwei sich in Nachstellrichtung erstreckenden Zahnstangen (50, 52), kämmt, von denen eine am Schleifkopfträger (36) und die andere am Abrichtgerät (42) angeordnet ist, dadurch gekennzeichnet, dass eine der beiden Zahnstangen (50, 52) vom Zustellantrieb (56, 58, 74) derart in ihrer Längsrichtung verschiebbar ist, dass das Ritzel (62) bei einer vom Nachstellantrieb hervorgerufenen Bewegung des Schleifkopfes (38) an einer Drehung gehindert ist und somit das Abrichtgerät (42) an der Bewegung des Schleifkopfes (38) im Verhältnis eins zu eins teilnehmen lässt.

## Claims

1. A generating method with indexing control for grinding teeth having an involute tooth flank profile, wherein reciprocating generating movements, feed movements in the longitudinal direction of the teeth, adjusting movements to compensate for wear of the grinding wheel and indexing movements are carried out between a disc-shaped grinding wheel (40) and the tooth flank of the teeth, characterised in that an additional infeed movement of the grinding wheel (40) and dressing device (42) is carried out in the direction of the root of the tooth, this infeed movement being effected in addition to the adjusting movement for compensating for the wear of the grinding wheel and being so great that it also grinds the tooth root.

2. A generating method with indexing control according to Claim 1, characterised in that the additional infeed movement is carried out only at the end of each generating stroke movement directed towards the root of the tooth.

3. A generating method with indexing control according to Claim 1, characterised in that during the rough grinding operation, the additional infeed movement is carried out at any desired moments during the generating movement.

4. A generating method with indexing control according to Claim 3, characterised in that during the finish-grinding operation following on the rough-grinding operation, the additional infeed movement is executed only at the end or shortly before the end of each generating stroke movement directed towards the root of the tooth and is backed out again before or at the beginning of the next generating stroke movement in the opposite direction.

5. A generating method with indexing control according to any one of the Claims 1 - 4, characterised in that an additional feed movement in the longitudinal direction of the tooth is carried out with the generating movement of the grinding wheel switched off, the grinding wheel being moved along the tooth root in order to smooth this.

6. An apparatus for carrying out the method according to any one of Claims 1 to 5, having at least one grinding head (38) on which a disc-shaped grinding wheel (40) is mounted, a grinding-head carrier (36) on which the grinding head (38) is guided for adjustment in the radial direction of the grinding wheel (40), a dressing device (42) which is displaceable in the adjusting direction and an adjustment drive (68) which is able to impart adjustment movements in the ratio of one is to two to the grinding head (38) and the dressing device (42) through adjustment gearing (54 and 60 to 70), characterised in that an infeed drive (56, 58, 74), which is able to impart common infeed movements of equal extent to the grinding head (38) and dressing device (42), is additionally associated with the adjustment gearing (54 and 60 to 70).

7. A apparatus according to Claim 6, wherein the dressing device (42) is guided on the grinding head (38) for displacement in the adjusting direction and mounted on the grinding head (38) there is a pinion (48) which meshes with two racks (50, 52) extending in the adjusting direction, one of which is disposed on the grinding-head carrier (36) and the other on the dressing device (42), characterised in that one of the two racks (50, 52) can be displaced in its longitudinal direction by the infeed drive (56, 58, 74) in such a manner that the pinion (62) is prevented from rotating during a movement of the grinding head (38) brought about by the adjusting drive and thus allows the dressing device (42) to participate in the movement of the grinding head (38) in the ratio of one to one.

## Revendications

1. Procédé de génération avec division pour rectifier des dentures avec des dents à flanc à profil en developpante où se produisent, entre une meule (40) en forme d'assiette et les flancs des dents de la denture, des mouvements alternatifs de génération, des mouvements de translation suivant la direction de la longueur des dents, des mouvements de correction pour la compensation de l'usure de la meule et des mouvements de division, caractérisé en ce qu'on exécute un mouvement d'avance supplémentaire de la meule (40) avec un appareil de dressage (42) en direction du fond des dents où ce mouvement d'avance se produit en plus du mouvement de correction pour la compensation de l'usure de la meule et avec une importance telle qu'on meule aussi le fond des dents.

2. Procédé selon la revendication 1, caractérisé en ce qu'on exécute le mouvement d'avance supplémentaire seulement à la fin de chaque mouvement de génération vers le fond des dents.

3. Procédé selon la revendication 1, caractérisé en ce que pendant la course d'ébauchage on exécute le mouvement d'avance supplémentaire à des instants choisis pendant le mouvement de génération.

4. Procédé selon la revendication 3, caractérisé en ce que pendant la course de finition associée à la course d'ébauchage on exécute le mouvement d'avance supplémentaire à la fin, ou peu avant celle-ci, de chaque mouvement de génération vers le fond des dents et le dégagement avant, ou au début, du mouvement de génération inverse suivant.

5. Procédé selon l'une des revendications 1 à 4, caractérisé en ce qu'on exécute une translation supplémentaire suivant la direction de la longueur des dents lors de l'interruption du mouvement de génération de la meule de manière que la meule se déplace au fond des dents afin de l'aplanir.

6. Dispositif pour la mise en oeuvre du procédé conforme à l'une des revendications 1 à 5, équipé d'au moins une tête porte-meule (38), une meule (40) en forme d'assiette montée sur cette tête, un support de tête porte-meule (36) sur lequel la tête porte-meule (38) est guidée pour la correction dans la direction radiale de la meule (40), un appareil de dressage (42) coulissant dans la direction du mouvement de correction et un mécanisme d'entraînement de correction (68) apte à communiquer par l'intermédiaire d'une transmission de correction (54 et 60 à 70) des mouvements de correction dans le rapport de 1 à 2 à la tête porte-meule (38) et à l'appareil de dressage (42), caractérisé en ce que la transmission de correction (54 et 60 à 70) est associée à un mécanisme d'entraînement d'avance supplémentaire (56, 58, 74) apte à communiquer à la fois à la tête porte-meule (38) et à l'appareil de dressage (42) des mouvements d'avance communs et égaux.

7. Dispositif selon la revendication 6, où l'appareil de dressage (42) est guidé en tanslation par la tête porte-meule (38) en direction du mouvement de correction et où un pignon (48) est monté sur la tête porte-meule (38) pour engréner avec deux crémaillères (50, 52) orientées suivant la direction du mouvement de correction qui sont fixées l'une au support de tête porte-meule (36) et l'autre à l'appareil de dressage, caractérisé en ce que l'une des deux crémaillères (50, 52) peut coulisser longitudinalement sous l'action du mécanisme d'avance supplémentaire (56, 58, 74) afin que le pignon (62) soit immobilisé en rotation lors d'un déplacement de la tête porte-meule (38) dû à la transmission de correction pour que l'appareil de dressage (42) puisse participer au mouvement de la tête porte-meule (38) dans le rapport unité.

Fig.1

Fig.2

Fig. 3

Fig.4a

40

Fig.4b

40

Fig.5a

Fig.5b